# EUROPÄISCHE PATENTANMELDUNG

(11) **EP 3 034 424 A1**
(43) Veröffentlichungstag der Anmeldung: **22.06.2016**
(21) Anmeldenummer: 15200840.5
(22) Anmeldetag: 17.12.2015
(51) Int. Cl.: B65D 19/44, B65D 85/68, B65G 1/00, B65G 13/00, B65G 1/14

(54) **VERPACKUNG FÜR ROLLENFÖRDERMODULE**

(30) Priorität: 19.12.2014 DE 102014226715
(71) Anmelder: Interroll Holding AG, 6592 Sant' Antonino (CH)
(72) Erfinder: HEINLEIN,, Steffen, 74924 Neckarbischofsheim (DE)
(74) Vertreter: Eisenführ Speiser

(57) **Zusammenfassung**

Die Erfindung betrifft eine Verpackungseinrichtung für Rollenfördermodule gelöst, welche umfasst: Eine Mehrzahl von Distanzierungseinheiten, wobei jede Distanzierungseinheit aufweist: Eine sich von einem ersten Ende zu einem zweiten Ende erstreckende Querstrebe, eine am ersten der Querstrebe angeordnete erste Vertikalstrebe, eine am zweiten Ende der Querstrebe angeordnete zweite Vertikalstrebe wobei die erste und zweite Vertikalstrebe einen U-förmigen Querschnitt aufweisen und solcherart an der Querstrebe angeordnet sind, dass die Schenkel des U-förmigen Querschnitts der ersten und zweiten Vertikalstreben voneinander weg weisen, wobei die Distanzierungseinheiten vertikal übereinander angeordnet sind, sodass die Vertikalstreben fluchtend zueinander angeordnet sind, und eine erste Stabilisierungsstrebe, die sich über zumindest zwei, vorzugsweise alle vertikal übereinander angeordnete ersten Vertikalstreben erstreckt und die in der Ausnehmung des U-förmigen Profils der ersten Vertikalstreben befestigt ist.

## Beschreibung

Die Erfindung betrifft eine Verpackungseinrichtung für Rollenfördermodule sowie eine Verpackungseinheit, in der mehrere Rollenfördermodule eines Rollenfördersystems mit entsprechenden Verpackungseinrichtungen zusammengefasst sind. Ein weiterer Aspekt ist ein Verfahren zum Verpacken von Rollenfördermodulen.

Rollenfördermodule sind ein Systembestandteil eines Rollenfördersystems und umfassen typischerweise eine Mehrzahl von drehbar gelagerten Förderrollen, die seitlich in einem linksseitigen und einem rechtsseitigen Rahmenprofil befestigt sind. Die Förderrollen können dabei Leerlaufrollen, Bremsrollen, Motorrollen oder von den Motorrollen angetriebene Rollen sein. Die seitlichen Rahmenprofile sind typischerweise als Blechprofile ausgeführt und können einen L-förmigen, U-förmigen oder andersartigen Querschnitt aufweisen, der eine ausreichende Steifigkeit aufweist. Solche Rollenfördermodule werden auch Förderbahnen, Rollenbahnen genannt. Rollenfördermodule dieser Art kommen zum Einsatz in Rollenfördersystemen und werden in großer Anzahl für den Aufbau von Logistikeinheiten eingesetzt, in denen ein solches Rollenfördersystem zur Förderung, Verteilung oder Zwischenlagerung von Produkten und jeglicher Art sonstiger Fördergüter dient. Bei der Auslieferung von solchen Rollenfördermodulen ist es daher notwendig, eine große Anzahl der Rollenfördermodule für den Versand vorzubereiten. Da es sich bei solchen Rollenfördermodulen um Bauteile mit Oberflächen und Lagerungen handelt, die bei unsachgemäßer Handhabung während des Transports Schaden nehmen können, ist auf eine sachgerechte Handhabung beim Transport zu achten.

Aus DE 29 507 483 U1 ist eine Vorrichtung zur Aufnahme von lagenweise gestapelten Gegenständen bekannt, die eine empfindliche Oberfläche aufweisen. Bei dieser Vorrichtung werden die einzelnen Lagen über- beziehungsweise untergreifende Zwischeneinlagen aus thermoplastischem Kunststoff jeweils zwischen zwei Gegenstände platziert, um eine Beschädigung der Oberfläche der Gegenstände zu vermeiden. Diese Zwischeneinlagen bestehen aus einer Trägerschicht und, zumindest einseitig, einer dünnen Kaschierung aus elastomerem Material. Diese Art von Vorrichtung eignet sich für den Versand hochempfindlicher Oberflächen, ist jedoch ungeeignet, um damit Rollenfördermodule zu schützen und zu transportieren. Dies liegt zum einen darin begründet, dass Rollenfördermodule keine notwendigerweise einheitliche Länge aufweisen und daher nicht der standardisierten Bauform der Zwischenlagen aus diesem vorbekannten Stand der Technik zugänglich sind, denn in diesem Fall wäre eine passende Abmessung nur durch zahlreiche unterschiedliche Bauarten der Zwischenlagen erzielbar. Zudem ist die thermoplastische Zwischenlage mit Kaschierung in der Herstellung kostenintensiv, was durch unterschiedliche Größenabmessungen weiter verstärkt würde.

Aus DE 4 306 148 A1 ist eine wiederverwendbare Verpackung aus modularen flächigen Werkstoffen vorbekannt. Hierbei wird durch entsprechende Gitterelemente mit der Möglichkeit der Positionierung von Abstandshaltern es ermöglicht, Güter innerhalb einer daraus gebildeten Box in zueinander fixierter Form zu lagern und zu transportieren. Die Kosten für die Herstellung dieser Verpackungselemente und der Aufwand, der für die Herstellung, die Verpackung und Entpackung notwendig wäre, um mit dieser Verpackung Rollenfördermodule zu transportieren, ist weitaus zu kostenintensiv und wird auch nicht durch die Wiederverwendbarkeit der Verpackungselemente kompensiert.

Aus DE 8 500 967 U1 ist ein Transport- und Lagerelement für Langgüter bekannt. Dieses so vorbekannte Element eignet sich zum Transportieren und Lagern einzelner Langgüter, kann aber nicht dazu eingesetzt werden, um Rollenfördermodule in einer großen Vielzahl sicher zu transportieren, denn aufgrund der unterschiedlichen Abmessungen und der Notwendigkeit, mehrere Rollenfördermodule sicher und benachbart zueinander anzuordnen und zu positionieren, wird durch diese so vorbekannte Vorrichtung nicht erzielt.

Schließlich ist aus EP 2 028 133 A1 eine Langgutpalette bekannt, die dazu dient, um ein oder mehrere Langgüter aufzunehmen. Die Langgüter werden allerdings hierbei nicht zueinander positioniert, sodass auch bei dieser vorbekannten Transporteinrichtung eine Beschädigung von Oberflächen oder Lagerungen von Rollenfördermodulen auftreten würde, wenn diese Vorrichtung zum Transport von Rollenfördermodulen eingesetzt würde.

Es besteht daher ein Bedarf für eine Verpackungseinrichtung, die dazu geeignet ist, Rollenfördermodule kostengünstig und zugleich sicher gegenüber Beschädigungen der Oberflächen und der Lagerungen zu verpacken und zu transportieren.

Diese Aufgabe wird erfindungsgemäß durch eine Verpackungseinrichtung für Rollenfördermodule gelöst, welche umfasst: Eine Mehrzahl von Distanzierungseinheiten, wobei jede Distanzierungseinheit aufweist: Eine sich von einem ersten Ende zu einem zweiten Ende erstreckende Querstrebe, eine am ersten der Querstrebe angeordnete erste Vertikalstrebe, eine am zweiten Ende der Querstrebe angeordnete zweite Vertikalstrebe wobei die erste und zweite Vertikalstrebe einen U-förmigen Querschnitt aufweisen und solcherart an der Querstrebe angeordnet sind, dass die Schenkel des U-förmigen Querschnitts der ersten und zweiten Vertikalstreben voneinander weg weisen, wobei die Distanzierungseinheiten vertikal übereinander angeordnet sind, sodass die Vertikalstreben fluchtend zueinander angeordnet sind, und eine erste Stabilisierungsstrebe, die sich über zumindest zwei, vorzugsweise alle vertikal übereinander angeordnete ersten Vertikalstreben erstreckt und die in der Ausnehmung des U-förmigen Profils der ersten Vertikalstreben befestigt ist.

Die erfindungsgemäße Verpackungseinrichtung weist eine Mehrzahl von Distanzierungseinheiten auf. Diese Distanzierungseinheiten dienen dazu, um einerseits vertikal übereinander gestapelte Rollenfördermodule voneinander in einem Abstand zu halten und folglich ein direktes Aufeinanderliegen von Teilen der Rollenfördermodule zu verhindern. Zum anderen dienen die Distanzierungseinheiten dazu, um die vertikal übereinander gestapelten Rollenfördermodule hinsichtlich ihrer Position zu fixieren, sodass eine Relativbewegung der Rollenfördermodule zueinander und der Rollenfördermodule zu den Distanzierungseinheiten verhindert wird. Grundsätzlich können die Distanzierungseinheiten dabei in unterschiedlicher Anordnung zwischen den vertikal gestapelten Rollenfördermodulen platziert werden. Es ist jedoch besonders bevorzugt, zumindest zwei solche Distanzierungseinheiten zwischen jeweils zwei vertikal benachbarte Rollenfördermodule anzuordnen, um eine zuverlässige Distanzierung und Positionierung zu erzielen.

Die Distanzierungseinheiten weisen grundsätzlich mehrere Streben auf, darunter ist zunächst eine Querstrebe, die sich als Balken erstreckt und ein erstes und ein zweites Ende an ihren Endseiten aufweist. An diesem ersten und zweiten Ende ist jeweils eine Vertikalstrebe angeordnete, insbesondere befestigt, die vorzugsweise im rechten Winkel zur Querstrebe ausgerichtet ist. Grundsätzlich kann die Vertikalstrebe als ein einstückiger Balken beziehungsweise als ein einstückiges Element ausgeführt sein. Sie kann aber auch aus mehreren Elementen zusammengesetzt sein. Beispielsweise kann die Vertikalstrebe durch ein erstes Vertikalstrebenelement, das vertikal auf dem Endabschnitt der Querstrebe aufgesetzt ist und ein zweites Vertikalstrebenelement, das vertikal unter dem Endabschnitt der Querstrebe angeordnet ist, gebildet werden, sodass die beiden Vertikalstrebenelemente gemeinsam mit dem dazwischen liegenden Endabschnitt der Querstrebe eine Vertikalstrebe bilden.

Die erste und zweite Vertikalstrebe weisen einen U-förmigen Querschnitt auf. Hierunter ist zu verstehen, dass die erste und zweite Vertikalstrebe einerseits eine Basis aufweisen, andererseits zwei Schenkel, die sich von der Basis aus in eine übereinstimmende Richtung im Querschnitt erstrecken. Dabei sind die beiden Vertikalstreben so angeordnet, dass sich die beiden Schenkel so erstrecken, dass sie von der Querstrebe wegweisen, also die Basis der ersten Vertikalstrebe zur Basis der zweiten Vertikalstrebe weist, beziehungsweise die beiden Vertikalstreben spiegelsymmetrisch zur Mitte der Querstrebe angeordnet sind und die Schenkel außenliegend platziert sind.

Erfindungsgemäß sind die Distanzierungseinheiten vertikal übereinander angeordnet, das heißt, die Querstreben liegen vertikal übereinander, indem eine erste Distanzierungseinheit zwischen einem ersten und einem darüber angeordnetem zweiten Rollenfördermodul in Schwerkraftrichtung genau unterhalb einer zweiten Distanzierungseinheit zwischen dem zweiten und einem darüber angeordneten dritten Rollenfördermodul platziert wird. Die Vertikalstreben kommen hierbei in eine fluchtende Anordnung zueinander und bilden hierdurch eine durchgängig vertikale Linie aus.

Die Distanzierungseinheiten sind dabei vertikal übereinander geordnet und die Vertikalstreben stützen sich aufeinander ab. Dies bedeutet, dass die Vertikalstreben eine Länge von ihrer oberen aufliegenden Endfläche zu ihrer unteren aufliegenden Endfläche aufweisen, die größer ist als die Vertikalbauhöhe eines Rollenfördermoduls, das zwischen den Distanzierungseinheiten angeordnet ist. Hierdurch wird zuverlässig vermieden, dass die Rollenfördermodule in Kontakt zueinander kommen und die Gewichtskraft der Rollenfördermodule wird über die Vertikalstreben aufgenommen und nach vertikal unten abgeleitet.

Erfindungsgemäß ist weiterhin eine Stabilisierungsstrebe vorgesehen, welche in der Ausnehmung des U-förmigen Profils der Vertikalstreben befestigt ist. Diese Stabilisierungsstrebe weist eine größere Länge als jede Vertikalstrebe auf, sodass sie zumindest zwei, vorzugsweise alle Vertikalstreben der übereinander angeordneten Distanzierungseinheiten miteinander verbindet. Die Stabilisierungsstrebe wird in der Ausnehmung des U-förmigen Profils befestigt und kann hierdurch einen Formschluss gegenüber horizontalen Verschiebungen der Vertikalstreben zueinander bewirken. Dabei ist zu verstehen, dass dieser Formschluss bereits solcherart bewirkt werden kann, dass die Stabilisierungsstreben eine Abmessung im Querschnitt aufweisen, die nur geringfügig kleiner als die Ausnehmung des U-förmigen Profils ist, sodass eine Art Spiel- oder Presspassung zwischen den Stabilisierungsstreben und den Vertikalstreben erreicht wird. Durch die Stabilisierungsstreben, die beispielsweise als einfaches, im Querschnitt rechteckiges Profil ausgeführt sein können, werden die vertikal übereinander gestapelten Distanzierungseinheiten folglich in ihrer Position zueinander zuverlässig fixiert und daher ein ungewünschtes Verschieben der Distanzierungseinheiten zueinander und der dazwischen gelagerten Rollenfördermodule zueinander zuverlässig vermieden.

Grundsätzlich kann die Erfindung mit einer einzigen Stabilisierungsstrebe auf einer Seite der Distanzierungseinheiten ausgeführt werden, die folglich die Vertikalstreben auf einer Seite der Querstrebe zueinander verbindet und in ihrer Position sichert. Es ist jedoch besonders bevorzugt, wenn die erfindungsgemäße Verpackungseinrichtung fortgebildet wird durch eine zweite Stabilisierungsstrebe, die sich über zumindest zwei, vorzugsweise alle vertikal übereinander angeordneten zweiten Vertikalstreben erstreckt und die in der Ausnehmung des U-förmigen Profils der zweiten Vertikalstreben befestigt ist. Bei dieser Ausführungsform wird eine weitere Stabilisierungsstrebe, die baugleich zur ersten Stabilisierungsstrebe sein kann, auf der anderen Seite der Distanzierungseinheiten in die dort vertikal übereinander gestapelten Längsstreben eingesetzt und darin befestigt. Hierdurch wird auf beiden Seiten der Distanzierungseinheit eine form- und gegebenenfalls kraftschlüssige Sicherung der Position der Distanzierungseinheiten zueinander erzielt und die Festigkeit der aus den Rollenfördermodulen und den Distanzierungseinheiten gebildeten Verpackungseinheit dadurch erhöht.

Noch weiter ist es bevorzugt, dass die Querstreben und die Vertikalstreben aus Holzwerkstoffprofilen ausgebildet sind. Insbesondere können die Querstreben und die Vertikalstreben, ebenso wie die Stabilisierungsstreben aus Vollholz ausgebildet sein, grundsätzlich ist es aber auch denkbar, einzelne oder alle Streben aus Holzspanmaterialien herzustellen. Die Verwendung von Holzwerkstoffprofilen für die erfindungsgemäße Verpackungseinrichtung ermöglicht einerseits eine kostengünstige Ressourcennutzung, andererseits eine wirtschaftliche Montage durch entsprechende Verbindungsweisen mittels Klammertechniken, Nageltechniken oder Verbindungen durch Stifte, Dübel oder dergleichen.

Dabei ist es insbesondere bevorzugt, wenn die erste und gegebenenfalls zweite Stabilisierungsstrebe durch Nägel oder Stifte an den ersten bzw. zweiten Vertikalstreben befestigt ist/sind. Bei dieser Ausführungsform wird eine schnelle Verbindung der einzelnen Streben untereinander erzielt, insbesondere können die erste und gegebenenfalls zweite Stabilisierungsstrebe schnell und zuverlässig an den Vertikalstreben befestigt werden und hierbei eine solche Verbindungskraft erzielt werden, dass neben der formschlüssigen Positionierungswirkung auch eine kraftschlüssige Positionierungswirkung erzielt wird.

Gemäß einer weiteren bevorzugten Ausführungsform ist vorgesehen, dass am oberen Ende der Vertikalstreben sich die Schenkel des U-Profils in vertikaler Richtung über eine Länge X weiter erstrecken als die Basis des U-Profils, und dass am unteren Ende der der Vertikalstreben sich die Basis des U-Profils in vertikaler Richtung über eine Länge Y weiter erstreckt als die Schenkel des U-Profils, oder umgekehrt, wobei X vorzugsweise kleiner oder gleich Y ist. Gemäß dieser Fortbildungsform sind die Längsstreben solcherart ausgeführt, dass sich die Schenkel am oberen Ende weiter erstrecken als die Basis und die Basis am unteren Ende weiter erstreckt als die Schenkel. Bei einem vertikalen Stapeln der solcherart fortgebildeten Längsstreben wird dadurch eine formschlüssige Sicherung der Längsstreben gegenüber eine horizontalen Bewegung zueinander in der horizontalen Ebene in zwei Richtungen erzielt und folglich eine einfache Stapelbarkeit und sichere Positionierung der Distanzierungseinheiten zueinander erreicht. Dabei ist zu verstehen, dass grundsätzlich die Anordnung auch umgekehrt, also in einer horizontalen Ebene gespiegelt ausgeführt sein könnte, sodass sich am unteren Ende die Schenkel weiter erstrecken und am oberen Ende der Vertikalstreben die Basis weiter erstreckt, wodurch die gleiche Funktionalität erzielt würde. Grundsätzlich ist es bevorzugt, dass die erweiterte Erstreckung der Basis des U-Profils größer ist als die erweiterter Erstreckung der Schenkel, sodass bei vertikalem Übereinanderstapeln der Distanzierungseinheiten die Basis der Vertikalstreben in Anschlag zueinander kommt und folglich die Gewichtskraft über die Basis der Vertikalstreben aufgenommen wird.

Noch weiter ist es bevorzugt, wenn eine erste Anordnung von übereinander angeordneten Distanzierungseinheiten mit zueinander fluchtenden Vertikalstreben und eine zweite Anordnung von übereinander angeordneten Distanzierungseinheiten mit zueinander fluchtenden Vertikalstreben, die horizontal beabstandet von der ersten Anordnung ist und mit der ersten Anordnung durch zumindest eine Verbindungsstrebe mechanisch verbunden ist, vorgesehen ist. Bei dieser Ausführungsform werden zwei vertikale Anordnungen von Distanzierungseinheiten eingesetzt, um die Rollenfördermodule in der Verpackungseinheit zueinander zu beabstanden und zu positionieren, wobei diese zwei Anordnungen von Distanzierungseinheiten horizontal voneinander beabstandet sind. Hierdurch wird eine Auflage jedes Rollenfördermoduls auf jeweils zwei horizontal voneinander beabstandeten Querstreben erzielt und jedes Rollenfördermodul wird durch vier seitliche Längsstreben in seiner Position horizontal gesichert. Grundsätzlich ist zu verstehen, dass bei längeren Rollenfördermodulen auch drei Anordnungen von vertikal gestaffelten Distanzierungseinheiten eingesetzt werden können und auch mehr als drei solcher Anordnungen eingesetzt werden können.

Dabei werden die horizontal voneinander beabstandeten Anordnungen von Distanzierungseinheiten durch zumindest eine Verbindungsstrebe mechanisch miteinander verbunden. Diese eine oder mehrere Verbindungsstreben dienen dazu, um die Position der Anordnungen von Distanzierungseinheiten zueinander zu sichern und die Stabilität des Stapels aus Distanzierungseinheiten und Rollenfördermodulen zu erhöhen. Die Verbindungsstrebe kann dabei vorzugsweise auch aus einem Holzwerkstoff bestehen. Sie kann grundsätzlich an jeder geeigneten Stelle mit den Distanzierungseinheiten verbunden sein, vorzugsweise kann die Verbindungsstrebe aber an den Längsstreben und/oder an den Stabilisierungsstreben befestigt sein.

Dabei ist es weiter besonders bevorzugt, wenn die zumindest eine Verbindungsstrebe eine erste Verbindungsstrebe beinhaltet, die sich in einem Winkel geneigt zur Horizontalen erstreckt, und eine zweite Verbindungsstrebe, die sich in einem Winkel geneigt zu der ersten Verbindungsstrebe erstreckt. Gemäß dieser Ausführungsformen werden zwei Verbindungsstreben zur Verbindung der Reihen von Distanzierungseinheiten eingesetzt, die solcherart schräg angeordnet sind, dass eine wirksame Verstrebung des gesamten Stapels nach Art einer Stabwerkanordnung mit Diagonalverstrebung ausgebildet, um hierdurch eine zuverlässige Versteifung gegenüber Schwankungen des Stapels in einer horizontalen Richtung zu erreichen.

Weiterhin ist es bevorzugt, ein Vertikalstrebenverlängerungskomponente bereitzustellen, welche zusätzlich auf die Vertikalstrebe aufgesetzt werden kann. Diese Vertikalstrebenverlängerungskomponente kann dabei bevorzugt so ausgeführt sein, dass an ihrem einen Ende sich die Schenkel des U-Profils weiter erstrecken als die Basis und an ihrem anderen Ende die Basis des U-Profils sich weiter erstreckt als die Schenkel. Hierdurch kann eine formschlüssige Sicherung der Vertikalstrebenverlängerungskomponente auf der Vertikalstrebe erzielt werden. Die Vertikalstrebenverlängerungskomponente dient dabei dazu, bei Rollenfördermodulen mit einer größeren Bauhöhe eingesetzt zu werden, um den Raum zwischen zwei Querstrebe in vertikaler Richtung zu vergrößern. Sie wird zu diesem Zwecke zwischen zwei Vertikalstreben eingesetzt.

Schließlich ist gemäß einer weiteren bevorzugten Ausführungsform vorgesehen, einen Vorsprung an der Querstrebe zum formschlüssigen Eingriff in eine Öffnung am Rollenfördermodul, bereitzustellen. Durch einen solchen Vorsprung, der beispielsweise als hervorstehender Stift mit rundem oder eckigem Querschnitt ausgeführt sein kann, wird es ermöglicht, ein Rollenfördermodul in einer einfachen Weise formschlüssig an den Distanzierungseinheiten zu arretieren und hierdurch eine Relativbewegung zwischen Rollenfördermodul und der Distanzierungseinheit zu verhindern. Bevorzugt ist der Vorsprung dabei an der Oberseite der Querstrebe angeordnet. Bei dieser Art der Anordnung kann die formschlüssige Verbindung zwischen dem Vorsprung und dem Rollenfördermodul beim Aufliegen des Rollenfördermoduls auf die Querstrebe bewirkt werden und eine einfache Positionierung ist hierdurch ermöglicht. Grundsätzlich ist zu verstehen, dass dann, wenn am Rollenfördermodul ein entsprechender Vorsprung vorhanden ist, dieses Prinzip auch invertiert sein kann und in der Querstrebe eine entsprechende Öffnung zur formschlüssigen Aufnahme eines solchen Vorsprungs ausgebildet sein kann.

Ein weiterer Aspekt der Erfindung ist eine Verpackungseinheit von mehreren Rollenfördermodulen eines Rollenfördersystems mit einer Verpackungseinrichtung, bei welcher die mehreren Rollenfördermodule sich horizontal erstrecken und vertikal übereinander gestapelt sind, wobei zwischen zwei benachbarten Rollenfördermodulen jeweils zumindest zwei horizontal zueinander beabstandete Distanzierungseinheiten angeordnet sind. Eine solche Verpackungseinheit stellt eine vorteilhafte Ausführung der Erfindung zur Verpackung und zum Transport mehrerer Rollenfördermodule dar, die in einer kompakten und gegenüber Beschädigungen der Oberflächen oder Lagerungen der Bauteile der Rollenfördermodule geschützten Anordnung resultiert.

Dabei ist zu verstehen, dass die Distanzierungseinheiten, die zwischen den Rollenfördermodulen angeordnet sind, solcherart vertikal übereinander gestapelt werden, dass sie eine Reihe ausbilden und die Vertikalstreben der Distanzierungseinheiten folglich zwei zueinander fluchtende Streben ausbilden, die entsprechend mit jeweils einer ersten und gegebenenfalls einer zweiten Längsstrebe auf der einen und der entsprechend anderen Seite stabilisiert werden können.

Dabei ist es weiter bevorzugt, wenn jedes Rollenfördermodul eine vertikale Höhe aufweist und jede Vertikalstrebe eine vertikale Länge aufweist, die größer ist als die Summe aus der vertikalen Höhe des Rollenfördermoduls und der Querstrebe. Unter der Länge der Vertikalstrebe ist hierbei die gesamte vertikal wirksame Länge zu verstehen, die sich aus der Summe der vertikalen Längen der einzelnen Komponenten ergibt, aus denen die Vertikalstrebe zusammengesetzt ist. Hierzu kann im einfachtsne Fall eine einzige Vertikalstrebenkomponente allein zählen, die stirnseitig am Ende der Querstrebe befestigt ist. Insbesondere kann dazu die vertikale Querschnittshöhe der Querstrebe, die vertikale Länge einer auf die Querstrebe aufgesetzten Vertikalstrebenkomponente und gegebenenfalls die vertikale Länge einer unter die Querstrebe fluchtend dazu untergesetzten Vertikalstrebenkomponente zählen. Durch diese Ausgestaltung wird vermieden, dass eine Gewichtskraft von den oberen Rollenfördermodulen in die darunter liegenden Rollenfördermodulen eingeleitet und von diesen aufgenommen werden muss. Stattdessen wird durch diese Ausgestaltung erreicht, dass die Gewichtskraft der Rollenfördermodule über die Vertikalstreben abgeleitet wird und folglich keine Belastung der Rollenfördermodule, die zu einer Verformung führen könnte, auftritt.

Bei einer besonders bevorzugten Ausführungsform ist am oberen Ende der Vertikalstrebe ein von der Vertikalstrebe aus nach einwärts über die Querstrebe ragendes Plattenelement befestigt, welches als Niederhalter dient. Hierdurch kann ein unerwünschtes Abheben des Rollenfördermoduls aus der Auflage auf der Querstrebe verhindert werden. Dabei ist zu verstehen, dass dieses Plattenelement in einer solchen Höhe oberhalb der Querstrebe montiert ist, dass ein auf der Querstrebe aufliegendes Rollenfördermodul an seinem oberen Rand mit einem zumindest geringen vertikalen Abstand zu dem Plattenelement positioniert ist, sodass eine Belastung des Rollenförderelements mit einer Gewichtskraft aus der Vertikalstrebe heraus nicht auftreten kann.

Schließlich ist ein weiterer Aspekt zur Nutzung und zum Einsatz der erfindungsgemäßen Verpackungseinrichtung beziehungsweise zur Ausbildung einer erfindungsgemäßen Verpackungseinheit ein Verfahren zum Verpacken von Rollenfördermodulen, mit den Schritten: Wechselweises Stapeln eines Rollenfördermoduls und zweier übereinstimmender, horizontal voneinander beabstandeter erster und zweiter Verpackungseinrichtungen, wobei eine Verpackungseinrichtung vorzugsweise aus einem Holzwerkstoff gefertigt ist und eine sich horizontal und quer zur horizontalen Längserstreckung der Rollenfördermodule erstreckende Querstrebe mit einem ersten und einem zweiten Ende aufweist, und am ersten und zweiten Ende der Querstrebe jeweils eine Vertikalstrebe angeordnet ist, Auflagern der Rollenfördermodule auf den Querstreben und Übertragen der Gewichtskraft der Rollenfördermodule in vertikaler Richtung über die Vertikalstreben, indem die Vertikalstreben fluchtend zueinander vertikal übereinander angeordnet sind und eine Länge aufweisen, dass die Vertikalstreben bündig anstoßend zueinander vertikal gestapelt sind, wobei die Vertikalstreben einen Querschnitt nach Art eines U-Profils mit nach außen, von den Rollenfördermodulen wegweisenden Schenkeln aufweist, und Befestigen von einer ersten Stabilisierungstrebe, die eine Länge aufweist, die sich über die Anzahl der vertikal gestapelten Vertikalstreben erstreckt, formschlüssig in dem Raum zwischen den Schenkeln des U-Profils der Vertikalstreben am ersten Ende der Querstreben, vorzugsweise weiterhin Befestigen einer zweiten Stabilisierungstrebe, die eine Länge aufweist, die sich über die Anzahl der vertikal gestapelten Vertikalstreben erstreckt, formschlüssig in dem Raum zwischen den Schenkeln des U-Profils der Vertikalstreben am zweiten Ende der Querstreben, vorzugsweise weiterhin Befestigen von einer ersten Stabilisierungstrebe in einem zur Horizontalen geneigten Winkel zur Verbindung der vertikal gestapelten ersten Verpackungseinrichtungen mit den davon beabstandeten vertikal gestapelten zweiten Verpackungseinrichtungen, und vorzugsweise weiterhin Befestigen von einer zweiten Stabilisierungstrebe in einem zur ersten Stabilisierungsstrebe geneigten Winkel zur Verbindung der vertikal gestapelten ersten Verpackungseinrichtungen mit den davon beabstandeten vertikal gestapelten zweiten Verpackungseinrichtungen. Dieses Verpackungsverfahren eignet sich in besonders günstiger Weise dazu, um mehrere Rollenfördermodule in einer vertikal gestapelten Anordnung zueinander zu positionieren und schonend zu transportieren, indem die Rollenfördermodule durch jeweils zwischengelegte Distanzierungseinheiten voneinander beabstandet und zueinander positioniert gehalten werden.

Die Erfindung wird anhand einer bevorzugten Ausführungsform die in den beiliegenden Figuren dargestellt ist, näher erläutert. Es zeigen:
- Fig. 1: eine perspektivische Frontalansicht einer Distanzierungseinheit gemäß der Erfindung,
- Fig. 2: eine Detailansicht aus Fig. 1,
- Fig. 3: eine perspektivische Frontalansicht von drei gestapelten Distanzierungseinheiten gemäß Fig. 1 mit einer Stabilisierungsstrebe,

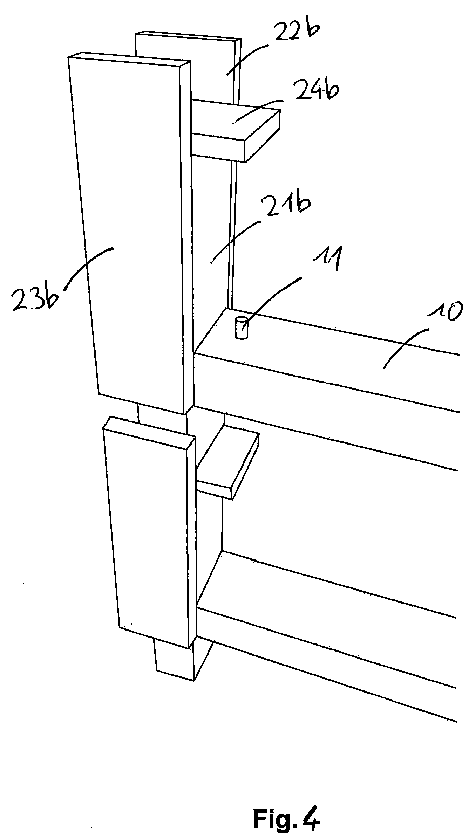

- Fig. 4: eine perspektivische Detailansicht von zwei gestapelten Distanzierungseinheiten,
- Fig. 5: eine perspektivische Detailansicht einer Vertikalstrebe,
- Fig. 6: eine Explosionsdarstellung von Elementen der Verpackungseinrichtung gemäß der Erfindung,
- Fig. 7: eine zusammengesetzte Darstellung der Komponenten der Verpackungseinrichtung gemäß Fig. 6, und
- Fig. 8: eine perspektivische Ansicht von schräg vorne seitlich einer Verpackungseinheit aus sieben gestapelten Rollenfördermodulen mit einer Beabstandung und Positionierung mittels der erfindungsgemäßen Verpackungseinrichtung.

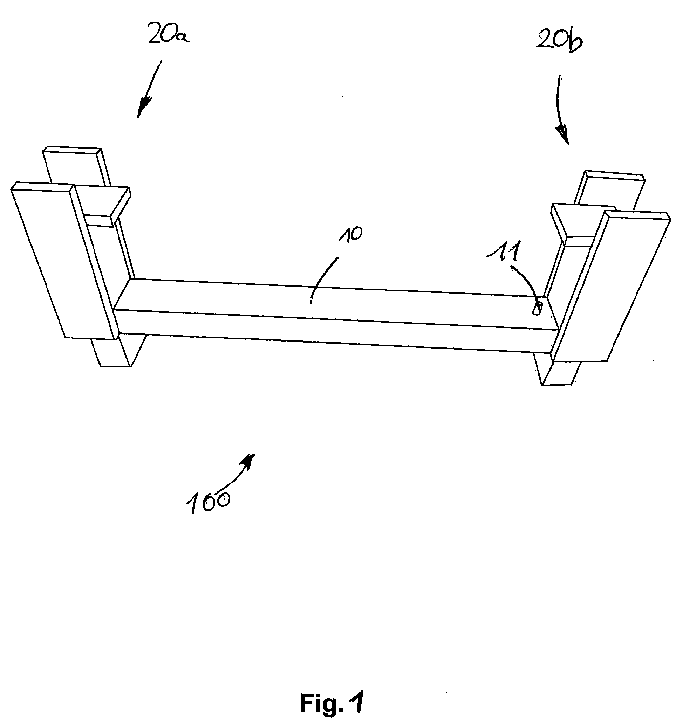

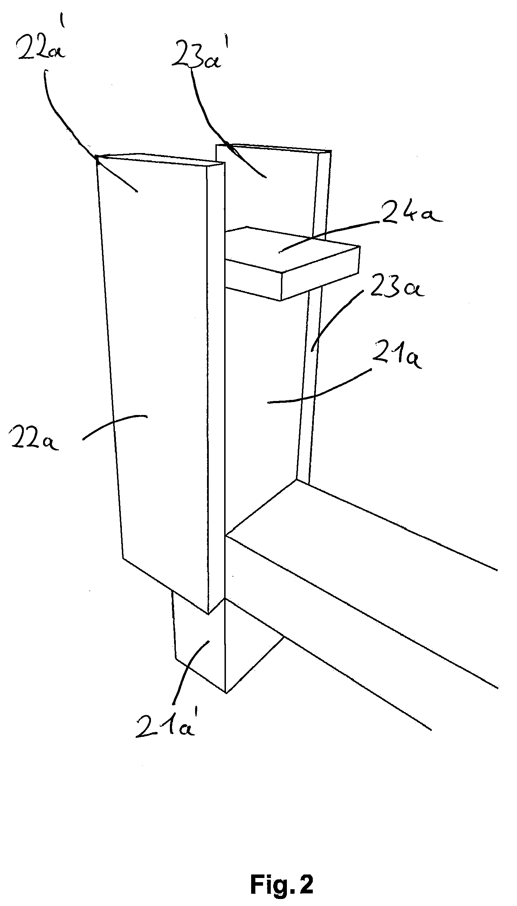

Bezugnehmend auf die Figuren 1, 2 und 5 umfasst eine erfindungsgemäße Verpackungseinrichtung eine Distanzierungseinheit 100, die grundsätzlich aus einer Querstrebe 10 und zwei seitlichen Vertikalstreben 20a, b zusammengesetzt ist. Die Vertikalstreben sind an den äußeren Enden der Querstrebe 10 angeordnet.

Die Vertikalstreben 20a, b sind grundsätzlich geometrisch übereinstimmend aufgebaut, sind aber um die Mitte der Querstrebe 10 spiegelsymmetrisch zueinander angeordnet.

Jede Vertikalstrebe 20a, b ist im Querschnitt U-förmig aufgebaut. Dieser Querschnitt wird durch das Zusammensetzen der Vertikalstreben aus mehreren Komponenten erzielt, was nachfolgend anhand der Vertikalstrebe 20a beschrieben wird.

Die Vertikalstrebe 20a umfasst eine zentrale Strebenkomponente 21a, die funktionell die Basis des U-förmigen Querschnittprofils darstellt. Seitlich an der zentralen Strebenkomponente 21a sind zwei plattenförmige Strebenkomponenten 22a, 23a befestigt, welche die Schenkel des U-förmigen Querschnittprofils bilden. Auf der zur Querstrebe 10 weisenden Seite sind die Kanten der plattenförmigen Strebenkomponenten 22a, 23a und die Kanten der zentralen Strebenkomponente 21a bündig zueinander angeordnet und bilden eine seitliche Anschlagsfläche für ein Rollenfördermodul, das auf der Querstrebe aufgelagert ist. Auf der nach außen weisenden Seite stehen die plattenförmigen Strebenkomponenten 22a, 23a weiter vor als die zentrale Strebenkomponente 21a, wodurch sich die U-Form im Querschnittprofil ergibt.

Wie weiter zu erkennen ist, ragt die zentrale Strebenkomponente 21a in einem unteren Bereich 21a' in vertikaler Richtung nach unten weiter vor als die beiden seitlichen flächigen Strebenkomponenten 22a, 23a. Demgegenüber ragen die beiden seitlichen, flächigen Strebenkomponenten 22a, 23a in einem oberen Bereich 22a', 23a' vertikal weiter vor als die zentrale Strebenkomponente 21a. Es ergibt sich hierdurch eine Art unvollständiges U-Profil im oberen Endbereich und im unteren Endbereich der Längsstrebe 20a, wobei im oberen Bereich das Profil durch die beiden Schenkel ohne die Basis gebildet wird und im unteren Bereich das Profil durch die Basis ohne die beiden Schenkel gebildet wird.

Am oberen Ende der zentralen Strebenkomponente ist ein Plattenelement 24a angeordnet, die nach innen ragt und folglich einen Teil des Endbereichs der Querstrebe in beabstandeter Positionierung überdeckt. Dieses Plattenelement 24a dient dazu, um ein auf der Querstrebe aufliegendes Rollenfördermodul daran zu hindern, bei vertikal abwärts gerichteten Beschleunigungen während des Transports nach oben von der Querstrebe abzuheben und folglich kurzzeitig den Kontakt zur Querstrebe zu verlieren, um danach wieder auf der Querstrebe aufzusetzen.

Auf eine Seite der Querstrebe ist im Endbereich und benachbart zu der Vertikalstrebe 20b ein Zapfen 11 in die Querstrebe eingesetzt und steht nach oben aus der Querstrebe hervor. Dieser Zapfen 11 dient dazu, um in einer Ausnehmung im Rollenfördermodul einzugreifen und hierdurch eine formschlüssige Fixierung des Rollenfördermoduls auf der Querstrebe zu bewirken.

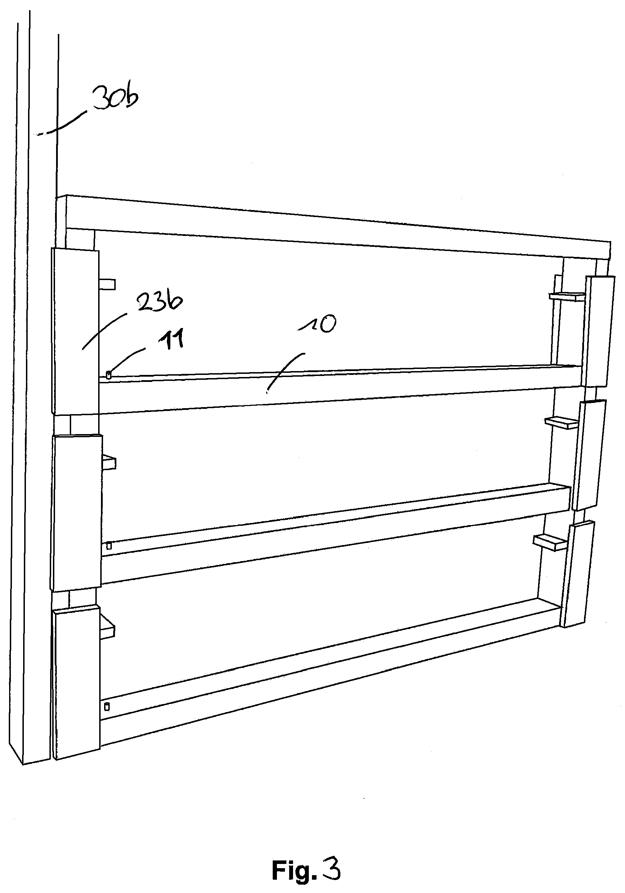

Fig. 3 zeigt eine Anordnung von drei Distanzierungseinheiten gemäß Fig. 1 in einer vertikal gestapelten Anordnung. Wie erkennbar ist, stützen sich die Längsstreben der einzelnen Distanzierungseinheiten aufeinander ab und können damit die Gewichtskraft der Rollenfördermodule, die auf den Querstreben 10 aufliegen, aufnehmen und nach unten ableiten.

Die in Fig. 3 gezeigte Anordnung von drei Distanzierungseinheiten wird durch eine Stabilisierungsstrebe 30b miteinander verbunden und in der Position ausgerichtet. Die Stabilisierungsstrebe 30b ist hierzu in die Ausnehmung der U-förmigen Querschnittprofile der Längsstreben eingesetzt und an den Längsstreben festgenagelt oder verschraubt. Hierdurch werden die Längsstreben miteinander verbunden und es wird ein Formschluss zwischen der Stabilisierungsstrebe 30b und den Schenkeln 22b, 23b bewirkt, der eine unerwünschte Horizontalverschiebung der Distanzierungseinheiten vermeidet. Grundsätzlich ist zu verstehen, dass auch auf der gegenüberliegenden Seite eine entsprechende Stabilisierungsstrebe an den Längsstreben befestigt sein kann, um auch auf dieser Seite eine entsprechende Fixierung und Positionierung der Längsstreben zueinander zu bewirken.

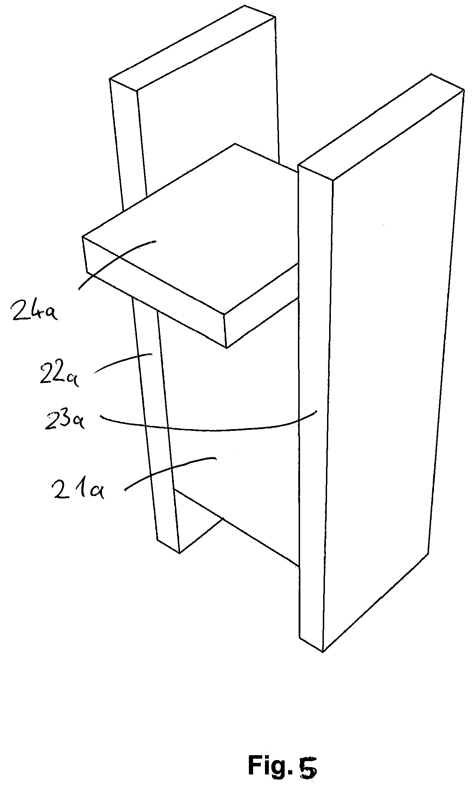

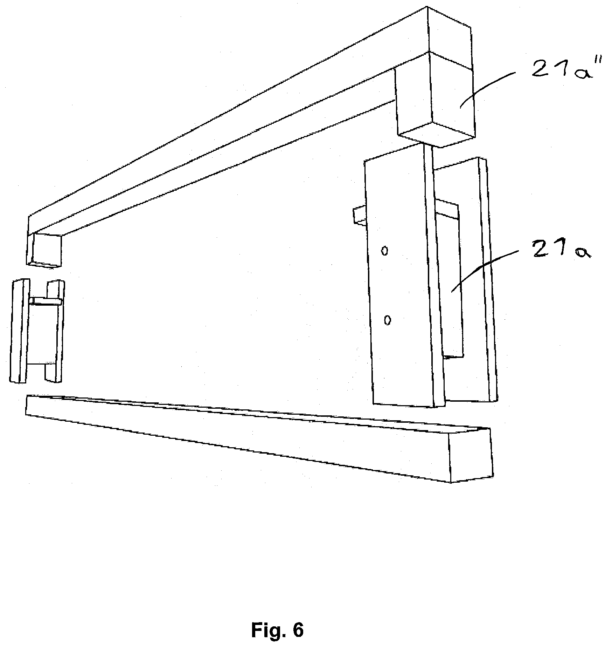

Fig. 5 zeigt einen Teil einer Vertikalstrebe in einer als vorgefertigte Komponente der erfindungsgemäßen Verpackungseinrichtung ausgeführten Bauweise. Die so vorgefertigte Komponente besteht aus vier Komponenten aus einem Holzwerkstoff, die miteinander durch Nägel, Stifte oder Klammern verbunden sind. Wie aus Fig. 5 in Zusammenschau mit Fig.1 und Fig. 6 ersichtlich, setzt sich die Vertikalstrebe einer Verpackungseinheit dabei aus einem unteren Vertikalstrebenanteil, einem Endabschnitt der Querstrebe und einem oberen Vertikalstrebenanteil zusammen, wobei der untere Vertikalstrebenanteil bevorzugt unterhalb des Endabschnitts der Querstrebe befestigt ist und der obere Vertikalstrebenanteil auf den Endabschnitt der Querstrebe aufgesetzt wird. Die Vertikalstreben weisen dabei vorzugsweise eine Länge auf, die größer oder gleich der Höhe des Rahmenprofils des Rollenfördermoduls ist, insbesondere größer als die Höhe des Rollenfördermoduls.

Bei der Verpackung der Rollenfördermodule kann dabei so vorgegangen werden, dass ein Rollenfördermodul auf die Querstreben aufgelegt wird, auf die Querstreben dann beidseits der in Fig. 5 abgebildete Teil der Längsstreben aufgelegt wird, in der vorgefertigten Bauform wie in Fig. 5 dargestellt, und daraufhin auf die Längsstreben wiederum eine Querstrebe aufgelegt wird, um darüber wieder ein Rollenfördermodul aufzulegen.

Fig. 6 zeigt eine Ausgestaltung, bei der die Querstreben mit einem Anteil der Längsstrebe vorgefertigt sind. Hierbei ist eine Querstrebe 10 mit einem Anteil 21a" verbunden und kann somit in eine entsprechende Ausnehmung der Basis an der Vertikalstrebe eingreifen, um auf diese Weise mit dem Vertikalstrebenanteil 21a der Vertikalstrebe, die für die Gewichtskraftableitung notwendige direkte Kopplung der Vertikalstreben zu erzielen.

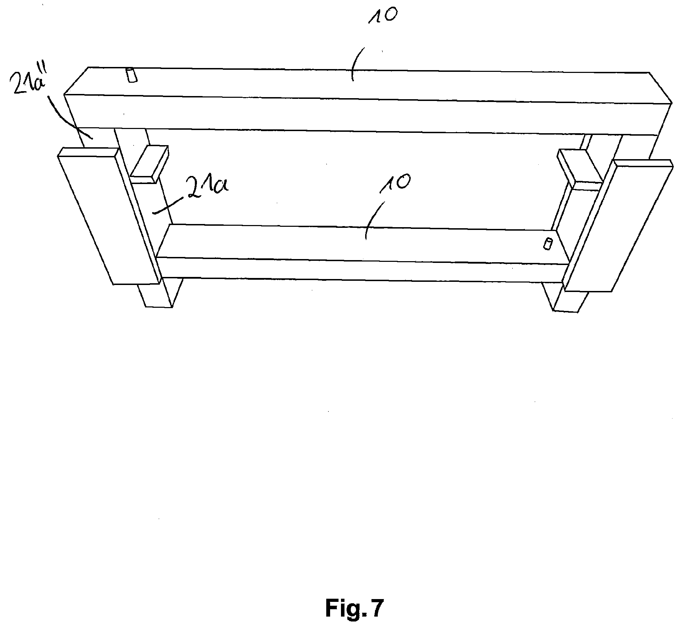

Fig. 7 zeigt eine Ausgestaltung einer solcherart zusammengesetzten Distanzierungseinheit mit darüber liegend angeordneter Querstrebe der nächsten Distanzierungseinheit.

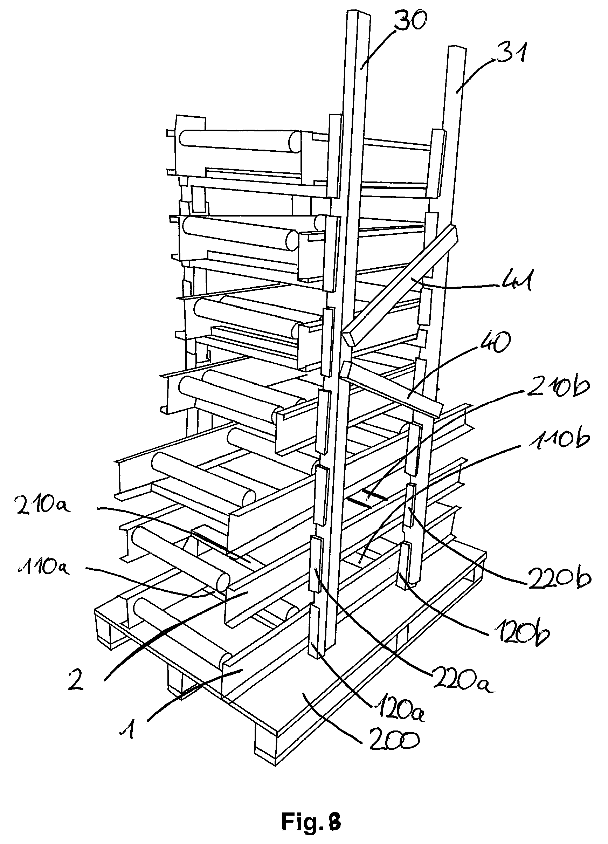

Fig. 8 zeigt schließlich eine Verpackungseinheit aus mehreren Rollenfördermodulen, die gemeinsam mit der erfindungsgemäßen Verpackungseinrichtung zu einer Transporteinheit aufgebaut sind.

Wie man erkennen kann, steht die Verpackungseinheit auf einer Palette 200, die beispielsweise als Holzpalette in Euro-Palettenabmessung ausgeführt sein kann.

Unmittelbar auf der Palette 200 sind zwei Querstreben 110 a, b flächig und horizontal beabstandet angeordnet, auf denen ein erstes Rollenfördermodul 1 aufliegt. Das erste Rollenfördermodul setzt sich, wie jedes weitere Rollenfördermodul, aus einem linken Rahmenprofil 1a, einem rechten Rahmenprofil 1b und mehreren dazwischen montierten Förderrollen 1c zusammen. Die Förderrollen können dabei über den unteren oder den oberen rand der Rahmenprofile vertikal hinausragen oder können in vertikaler Richtung innerhalb der Rahmenprofile liegen. An den ersten beiden Querstreben sind seitlich die zu unterst liegenden Längsstreben 120 a, b an den Enden angeordnet und auf diesen Längsstreben sind wiederum Querstreben 210 a, b angeordnet, die sich von der einen Seite des Rollenfördermoduls zur anderen Seite des Rollenfördermoduls quer erstrecken. Auf diesen Querstreben 210 a, b wiederum ist ein zweites Rollenfördermodul 2 abgelegt wiederum seitlich eingefasst von Längsstreben 220 a, b und in dieser grundsätzlichen Aufbauanordnung sind wechselweise jeweils Querstreben und Rollenfördermodule vertikal übereinander gestapelt, wobei die Querstreben durch entsprechende Längsstreben in vertikaler Richtung zueinander distanziert und positioniert werden und die Gewichtskraft der Rollenfördermodule über diese vertikal übereinander gestapelten Vertikalstreben aufgenommen wird.

In der Ausnehmung des U-förmigen Querschnitts der Vertikalstreben ist jeweils eine Stabilisierungsstrebe 30, 31 befestigt, was im dargestellten Fall durch maschinell eingebrachte Stifte schnell und zuverlässig erfolgen kann. Diese Stabilisierungsstreben 30, 31 positionieren die einzelnen Vertikalstreben in fluchtender Anordnung zueinander und halten diese Ausrichtung fixiert.

Die beiden Stabilisierungsstreben 30, 31sind durch zwei Verbindungsstreben 40, 41 miteinander verbunden. Die Verbindungsstreben 40, 41 sind dabei so ausgerichtet, dass beide schräg zur Horizontalen und zugleich schräg zueinander ausgerichtet sind, sodass sich eine im Wesentlichen verwindungsteife Struktur des Gesamtaufbaus ergibt.

## Patentansprüche

1. Verpackungseinrichtung für Rollenfördermodule, umfassend:
- Eine Mehrzahl von Distanzierungseinheiten, wobei jede Distanzierungseinheit aufweist:
∘ Eine sich von einem ersten Ende zu einem zweiten Ende erstreckende Querstrebe,
∘ eine am ersten der Querstrebe angeordnete erste Vertikalstrebe,
∘ eine am zweiten Ende der Querstrebe angeordnete zweite Vertikalstrebe
∘ wobei die erste und zweite Vertikalstrebe einen U-förmigen Querschnitt aufweisen und solcherart an der Querstrebe angeordnet sind, dass die Schenkel des U-förmigen Querschnitts der ersten und zweiten Vertikalstreben voneinander weg weisen,
- Wobei die Distanzierungseinheiten vertikal übereinander angeordnet sind, sodass die Vertikalstreben fluchtend zueinander angeordnet sind, und
- Eine erste Stabilisierungsstrebe, die sich über zumindest zwei, vorzugsweise alle vertikal übereinander angeordnete ersten Vertikalstreben erstreckt und die in der Ausnehmung des U-förmigen Profils der ersten Vertikalstreben befestigt ist.

2. Verpackungseinrichtung nach Anspruch 1,
**gekennzeichnet durch** eine zweite Stabilisierungsstrebe, die sich über zumindest zwei, vorzugsweise alle vertikal übereinander angeordnete zweiten Vertikalstreben erstreckt und die in der Ausnehmung des U-förmigen Profils der zweiten Vertikalstreben befestigt ist.

3. Verpackungseinrichtung nach Anspruch 1 oder 2,
**dadurch gekennzeichnet, dass** die Querstreben und die Vertikalstreben aus Holzwerkstoffprofilen ausgebildet sind.

4. Verpackungseinrichtung nach einem der vorhergehenden Ansprüche,
**dadurch gekennzeichnet, dass** die erste und gegebenenfalls zweite Stabilisierungsstrebe durch Nägel, Schrauben oder Stifte an den ersten bzw. zweiten Vertikalstreben befestigt ist/sind.

5. Verpackungseinrichtung nach einem der vorhergehenden Ansprüche,
**dadurch gekennzeichnet, dass** am oberen Ende der Vertikalstreben sich die Schenkel des U-Profils in vertikaler Richtung über eine Länge X weiter erstrecken als die Basis des U-Profils, und
dass am unteren Ende der der Vertikalstreben sich die Basis des U-Profils in vertikaler Richtung über eine Länge Y weiter erstreckt als die Schenkel des U-Profils, oder umgekehrt, wobei X vorzugsweise kleiner oder gleich Y ist.

6. Verpackungseinrichtung nach einem der vorhergehenden Ansprüche,
**gekennzeichnet durch** eine erste Anordnung von übereinander angeordneten Distanzierungseinheiten mit zueinander fluchtenden Vertikalstreben und eine zweite Anordnung von übereinander angeordneten Distanzierungseinheiten mit zueinander fluchtenden Vertikalstreben, die horizontal beabstandet von der ersten Anordnung ist und mit der ersten Anordnung **durch** zumindest eine Verbindungsstrebe mechanisch verbunden ist.

7. Verpackungseinrichtung nach Anspruch 6,
**dadurch gekennzeichnet, dass** die zumindest eine Verbindungsstrebe eine erste Verbindungsstrebe beinhaltet, die sich in einem Winkel geneigt zur Horizontalen erstreckt, und eine zweite Verbindungsstrebe, die sich in einem Winkel geneigt zu der ersten Verbindungsstrebe erstreckt.

8. Verpackungseinrichtung nach einem der vorhergehenden Ansprüche,
**dadurch gekennzeichnet, dass** am oberen Ende der Vertikalstrebe ein von der Vertikalstrebe aus nach einwärts über die Querstrebe ragendes Plattenelement befestigt, welches als Niederhalter dient.

9. Verpackungseinrichtung nach einem der vorhergehenden Ansprüche,
**gekennzeichnet durch** eine Vertikalstrebenverlängerungskomponente, welche zusätzlich auf die Vertikalstrebe aufgesetzt werden kann.

10. Verpackungseinrichtung nach einem der vorhergehenden Ansprüche,
**gekennzeichnet durch** einen Vorsprung an der Querstrebe zum formschlüssigen Eingriff in eine Öffnung am Rollenfördermodul.

11. Verpackungseinheit von mehreren Rollenfördermodule eines Rollenfördersystems mit einer Verpackungseinrichtung nach einem der vorhergehenden Ansprüche, **dadurch gekennzeichnet, dass** die mehreren Rollenfördermodule sich horizontal erstrecken und vertikal übereinander gestapelt sind, wobei zwischen zwei benachbarten Rollenfördermodule jeweils zumindest zwei horizontal zueinander beabstandete Distanzierungseinheiten angeordnet sind.

12. Verpackungseinheit nach Anspruch 11,
**dadurch gekennzeichnet, dass** jedes Rollenfördermodul eine vertikale Höhe aufweist und jede Vertikalstrebe eine vertikale Länge aufweist, die größer ist als die Summe aus der vertikalen Höhe des Rollenfördermoduls und der Querstrebe.

13. Verpackungseinrichtung nach Anspruch 11 oder 12
**dadurch gekennzeichnet, dass** am oberen Ende der Vertikalstrebe ein von der Vertikalstrebe aus nach einwärts über die Querstrebe ragendes Plattenelement befestigt, welches als Niederhalter dient, wobei der Abstand zwischen der Querstrebe und dem Plattenelement größer oder gleich der Höhe eines Rahmenprofils eines Rollenfördermoduls ist.

14. Verfahren zum Verpacken von Rollenfördermodulen, mit den Schritten:
- Wechselweises Stapeln eines Rollenfördermoduls und zweier übereinstimmender, horizontal voneinander beabstandeter erster und zweiter Verpackungseinrichtungen, wobei
- Eine Verpackungseinrichtung vorzugsweise aus einem Holzwerkstoff gefertigt ist und eine sich horizontal und quer zur horizontalen Längserstreckung der Rollenfördermodule erstreckende Querstrebe mit einem ersten und einem zweiten Ende aufweist, und
- Am ersten und zweiten Ende der Querstrebe jeweils eine Vertikalstrebe angeordnet ist,
- Auflagern der Rollenfördermodule auf den Querstreben und
- Übertragen der Gewichtskraft der Rollenfördermodule in vertikaler Richtung über die Vertikalstreben, indem die Vertikalstreben fluchtend zueinander vertikal übereinander angeordnet sind und eine Länge aufweisen, dass die Vertikalstreben bündig anstoßend zueinander vertikal gestapelt sind,
- Wobei die Vertikalstreben einen Querschnitt nach Art eines U-Profils mit nach außen, von den Rollenfördermodulen wegweisenden Schenkeln aufweist, und
- Befestigen von einer ersten Stabilisierungstrebe, die eine Länge aufweist, die sich über die Anzahl der vertikal gestapelten Vertikalstreben erstreckt, formschlüssig in dem Raum zwischen den Schenkeln des U-Profils der Vertikalstreben am ersten Ende der Querstreben,
- Vorzugsweise weiterhin Befestigen einer zweiten Stabilisierungstrebe, die eine Länge aufweist, die sich über die Anzahl der vertikal gestapelten Vertikalstreben erstreckt, formschlüssig in dem Raum zwischen den Schenkeln des U-Profils der Vertikalstreben am zweiten Ende der Querstreben,
- Vorzugsweise weiterhin Befestigen von einer ersten Stabilisierungstrebe in einem zur Horizontalen geneigten Winkel zur Verbindung der vertikal gestapelten ersten Verpackungseinrichtungen mit den davon beabstandeten vertikal gestapelten zweiten Verpackungseinrichtungen, und
- Vorzugsweise weiterhin Befestigen von einer zweiten Stabilisierungstrebe in einem zur ersten Stabilisierungsstrebe geneigten Winkel zur Verbindung der vertikal gestapelten ersten Verpackungseinrichtungen mit den davon beabstandeten vertikal gestapelten zweiten Verpackungseinrichtungen.
